# EUROPEAN PATENT SPECIFICATION

(11) **EP 0 463 733 B1**
(45) Date of publication and mention of the grant of the patent: **16.02.1994**
(21) Application number: 91304760.1
(22) Date of filing: 24.05.1991
(51) Int. Cl.: B60R 5/04

(54) **Compartment covers for vehicles**
Abdeckung für Fahrzeugräume
Couvercles pour compartiments de véhicules

(30) Priority: 24.05.1990 GB 9011607
(43) Date of publication of application: 02.01.1992
(73) Proprietor: MIRLE INTERNATIONAL LIMITED, Hitchin, Hertfordshire SG5 2DY (GB)
(72) Inventor: Muller, Michael Edward, Hitchin, Hertfordshire SG4 8UN (GB)
(74) Representative: Thomson, Roger Bruce

(56) References cited:
- DE-A- 3 922 450
- FR-A- 2 597 919
- US-A- 4 262 955
- US-A- 4 776 625
- PATENT ABSTRACTS OF JAPAN vol. 10, no. 277 (M-519)(2333) 19 September 1986,
- & JP-A-61 98654 (NISSAN MOTOR CO LTD) 16 May 1986,

## Description

This invention relates generally to automobile compartment covers, for example covers which screen the boot area of an estate-type vehicle or the hatch compartment in a hatch-back vehicle. With vehicles of this type it is desirable that objects placed in the compartment provided at the rear of the vehicle should be screened from the sight of people outside the vehicle, for security reasons. Such covers also serve to contain objects in the case of a violent manoeuvre or accident.

Various types of automobile compartment cover are known, many of which include an elongate cylindrical roller around which is wound a cover sheet which has one end anchored to the roller and which can be drawn out for engagement of the free end of the cover sheet adjacent to the rear of the vehicle. A torsion spring is provided within the device to keep the cover sheet taut when the free end is withdrawn and engaged.

Conventionally, such automobile compartment covers are fixed to the vehicle by brackets or other fittings at each end of the cover assembly, i.e. by brackets or fittings which are mounted to the sides of the vehicle (e.g. US-A-4776625). The fixing brackets are mounted through the trim at the sides of the vehicle and are mounted on what are substantially vertical surfaces of the vehicle. This gives rise to a number of disadvantages. There are problems with the rear seat belts in many vehicles, because of the absence of any convenient hole or slot through which the seat belts can pass on their way to being fixed to the vehicle floor. Also, with the conventional side fixings, there are problems arising from trim tolerances, thus requiring the compartment cover to be capable of adjustment.

It is an object of the present invention to provide an automobile compartment cover which does not require the use of side brackets for mounting the cover within the vehicle.

It is a further object of the present invention to provide an automobile compartment cover which enables the rear seat belts in a vehicle to pass the cover assembly without difficulty.

It is yet a further object of the present invention to provide an automobile compartment cover which can be made at reduced cost as compared with conventional covers. This is achieved at least partially by simplicity of design and by the use of a simpler fixing mechanism.

Broadly in accordance with the present invention there is provided an automobile compartment cover comprising a housing adapted to be fitted across the width of a vehicle compartment, cover sheet means adapted in use to screen the compartment and otherwise stored within or adjacent to the housing, and fixing means arranged to secure the housing directly to internal fabrication surfaces of the vehicle.

The fixing means may comprise two quick-release fastenings, one adjacent to each end of the cover assembly.

Alternatively, the fixing means may comprise latches, one adjacent to each end of the cover assembly.

In order that the invention may be more fully understood, two presently preferred embodiments of vehicle compartment cover assembly in accordance with the invention will now be described by way of example and with reference to the accompanying drawings. In the drawings:
Fig. 1 is a top plan view of a first embodiment of vehicle compartment cover assembly;
Fig. 2 is a side view of the assembly shown in Fig. 1;
Fig. 3 is a view of the assembly of Fig. 1 as seen from the rear of the vehicle;
Fig. 4 is a top plan view of a second embodiment of vehicle compartment cover assembly in accordance with the invention, with parts broken away, and omitting the latches; and
Fig. 5 is a view of the assembly of Fig. 4 as seen from the rear of the vehicle, again with parts broken away.

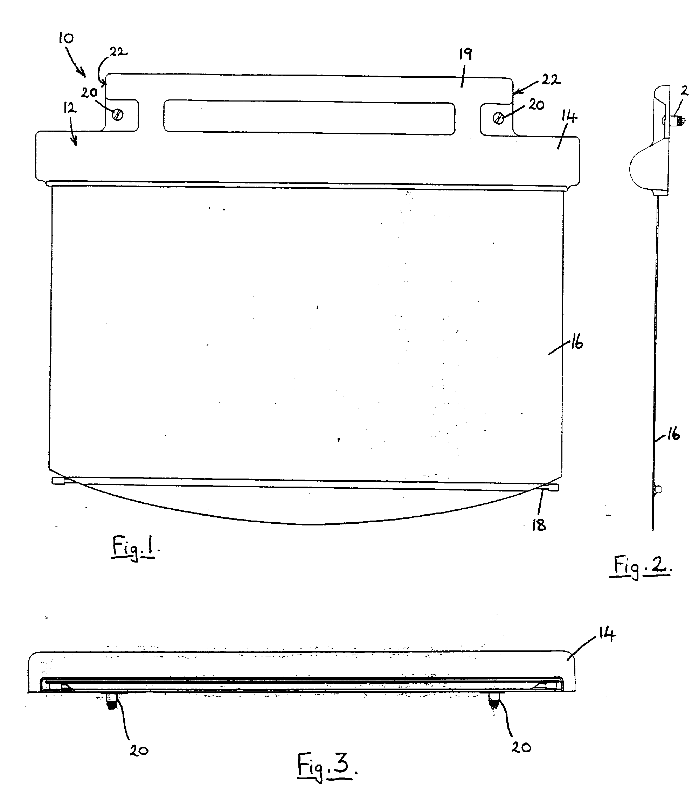

Referring first to Figs. 1 to 3, there is shown a vehicle compartment cover assembly, indicated generally at 10, which comprises a housing 12, which may be a one-piece moulding of plastics material or which may be made as a vacuum-formed unit. The longer length portion 14 of the housing 12 serves to contain a roller mechanism (not shown) and cover sheet 16. This cover sheet 16 may be made of any suitable material and is provided with a gripping locating rod 18 adjacent to its free outer edge to enable it to be grasped by the user and withdrawn from the housing for use. The cover sheet 16 is wound around a cylindrical roller and is anchored thereto and suitable spring means are provided within the housing to keep the sheet 16 taut when the free end is withdrawn and engaged in place. That engagement can be by the locating of the gripping rod 18 in suitable slots or recesses within the vehicle. The housing 12 also includes a shorter length portion 19 which extends substantially horizontally in use and which is positioned behind the rear seats of the vehicle. This shorter length portion 19 carries two quick-release fastenings 20, one adjacent to each end of the housing. These fastenings 20 extend vertically downwards and are secured to generally horizontal internal fabrication surfaces of the vehicle. Any appropriate internal fabrication surfaces within the vehicle may be used for this purpose, and the fasteners 20 will be located appropriately for that purpose. It is to be noted that the fasteners are secured directly to these internal fabrication surfaces of the vehicle, without the use of any intermediate brackets or holders or the like. The quick-release fastenings 20 may be fractional-turn fasteners for example. Such fractional-turn fasteners may be of various forms, including having wing-head studs, knurled head studs and slotted head studs.

It will be appreciated from Fig. 1 that the configuration of the housing 12 is such that it defines recesses 22 at each end of the housing, through which vehicle seat belts can pass without interference. Additionally, because the compartment cover assembly is mounted above the side walls of the vehicle, and is secured down to generally horizontally extending internal fabrication surfaces within the vehicle, the assembly has greater width coverage, ie. the assembly can extend substantially the full width of the vehicle and provide greater screening. The fixing of the assembly to the internal fabrication surfaces by the fastenings 20 provides adequate security of fixing. Because no complex end fastenings are required, the cost of manufacture of this assembly is low.

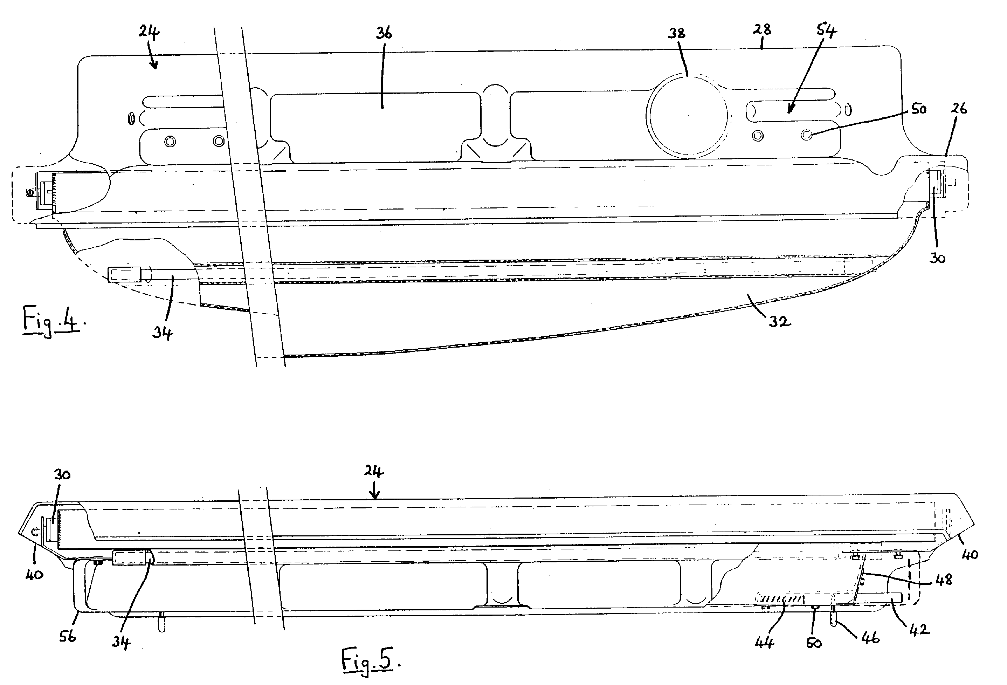

Referring now to Figs. 4 and 5, these show a second embodiment of vehicle compartment cover assembly. Here again, the assembly comprises a housing 24 which comprises a longer length portion 26 and a shorter length portion 28. Again, the housing 24 can be formed by moulding or vacuum forming. The longer length portion 26 of the housing contains a roller 30 around which is wrapped a cover sheet 32. The cover sheet is again provided with a gripping/locating rod 34 adjacent to its free end. The shorter length portion 28 of the housing is provided in its upper surface with recesses 36 for odd items such as pens and pencils, and with a further recess 38 for a cup or other drinks container for example. The housing in this embodiment, as seen most clearly from Fig. 5, is shaped to define a sloping locating surface 40 at each end which, when the assembly is fitted into the vehicle, abuts down against appropriate internal surfaces within the vehicle.

In this second embodiment the fixing of the housing to the vehicle is effected by a latch mechanism at each end of the shorter length portion 28 of the housing 24. This is shown most clearly in Fig. 5. The latch mechanism comprises a rod 42 which extends horizontally and which is horizontally displaceable. A spring 44 provides an outward bias to the rod 42. Attached to the rod 42 is a pin 46 or the like which can be grasped by the user and used to engage and disengage the latch. The latch can operate for example in the manner of a bolt on a gate, ie. being fastened and unfastened by a rotational and translational motion. The rod 42 is adapted to fit directly into a hole provided in an internal fabrication surface of the vehicle. No intermediate bracket or the like is required. The latch mechanism is held in place on the housing 24 by a metal bracket 48 which is held in place by rivets 50. The latching rod 42 is located within the zone indicated at 54 in Fig. 4. At each end of the shorter length portion 28 of the housing there is also provided a reinforcing angle piece 56 for strengthening purposes. The angle piece at the right-hand end of the assembly as shown in Fig. 5 is indicated by broken lines for greater clarity.

It is to be understood that although in the described embodiments the fastening means extends in the one case vertically and in the other case horizontally, into appropriate internal fabrication surfaces within the vehicle, such fastening means could extend at some other angle if appropriate. Moreover, the two particular types of fastenings described above are given by way of example only and other alternative fastening mechanisms could be used, provided that they can operate without the need for any intermediate member between the cover assembly and the relevant internal fabrication surfaces.

## Claims

1. A vehicle compartment cover assembly comprising a housing (12;24) adapted to be fitted across the width of a vehicle compartment, and cover sheet means (16;32) adapted in use to screen the compartment and otherwise stored within or adjacent to the housing, characterised by fixing means (20;42) arranged to secure the housing directly to internal fabrication surfaces of the vehicle.

2. An assembly according to claim 1, characterised in that the fixing means comprise two quick-release fastenings (20;42), one adjacent to each end of the cover assembly.

3. An assembly according to claim 1 or 2, characterised in that the fixing means comprise fractional-turn fasteners (20).

4. An assembly according to claim 1 or 2, characterised in that the fixing means comprise spring-biassed latches (42,44,46) having rod means (42) adapted to be received in holes in said internal fabrication surfaces.

5. An assembly according to any preceding claim characterised in that the housing has an underside shaped to define a positional locating surface (40) adapted to abut against internal fabrication surfaces of the vehicle.

6. An assembly according to any preceding claim, characterised in that the housing has recesses (22) adjacent to each end to permit the passage of vehicle seat belts.

7. An assembly according to any of claims 1 to 3, characterised in that the fixing means (20) are adapted to be secured to generally horizontal internal fabrication surfaces.

8. An assembly according to claim 4, characterised in that the latches are fastened to the housing and the rod means (42) extend and are displaceable substantially horizontally.

## Patentansprüche

1. Fahrzeugraum-Abdeckungseinrichtung bestehend aus einem Gehäuse (12;24) das quer über die Breite eines Fahrzeugraumes befestigt werden kann und Abdeckplanmittel (16;32) enthält, die im Gebrauchsfall den Fahrzeugraum und darin oder in der Nähe des Gehäuses aufbewahrte Gegenstände abzudecken vermögen, **dadurch gekennzeichnet,** daß Befestigungsmittel (20;52) vorgesehen sind, die das Gehäuse unmittelbar an im Fahrzeuginneren herstellungsmäßig vorhandenen Oberflächen anzubringen erlauben.

2. Einrichtung nach Anspruch 1, **dadurch gekennzeichnet,** daß als Befestigungsmittel aus schnell lösbare Befestigungsmittel (20;42) an jedem Ende der Abdeckeinrichtung vorhanden sind.

3. Einrichtung nach Anspruch 1 oder 2, **dadurch gekennzeich-** **net,** daß die Befestigungsmittel aus fraktionär-drehbaren Schrauben und Muttern (20) bestehen.

4. Einrichtung nach Anspruch 1 oder 2, **dadurch gekennzeich-** **net,** daß die Befestigungsmittel aus federbeaufschlagten Schnappriegeln (42,44,46) bestehen, deren eigentliche Riegel (42) in in den Fahrzeuginnenoberflächen vorhandene Löcher einfassen können.

5. Einrichtung nach einem der vorerwähnten Ansprüche, **dadurch** **gekennzeichnet,** daß das Gehäuse eine Unterseite aufweist, die so geformt ist, daß sie eine Auflagefläche (40) besitzt, die direkt auf inneren Oberflächen des Fahrzeugs aufliegen kann.

6. Einrichtung nach einem der vorerwähnten Ansprüche, **dadurch** **gekennzeichnet,** daß das Gehäuse an jedem Ende Aussparungen (22) aufweist, um den Durchlaß von Fahrzeugsitzgurten zu erlauben.

7. Einrichtung nach einem der Ansprüche 1 bis 3, **dadurch ge-** **kennzeichnet,** daß die Befestigungsmittel (20) so beschaffen sind, daß sie auf im allgemeinen horizontalen inneren Oberflächen des Fahrzeugs anzubringen sind.

8. Einrichtung nach Anspruch 4, **dadurch gekennzeichnet,** daß die Schnappriegel im Gehäuse angeordnet sind und die Riegelstangen (42) sich im wesentlichen horizontal erstrecken und in dieser Richtung auch verschiebbar sind.

## Revendications

1. Ensemble de couverture d'un compartiment de véhicule, comprenant une cage (12 ; 24) destinée à être fixée sur la largeur d'un compartiment de véhicule et un moyen de couverture en feuille (16 ; 32) destiné en service à cacher le compartiment et sinon à être rangé à l'intérieur de, ou au voisinage de, la cage, caractérisé par des moyens de fixation (20 ; 42) destinés à fixer la cage directement sur des surfaces internes de la superstructure du véhicule.

2. Ensemble selon la revendication 1, caractérisé en ce que les moyens de fixation comprennent deux organes de fixation à libération rapide (20 ; 42), l'un au voisinage de chaque extrémité de l'ensemble de couverture.

3. Ensemble selon la revendication 1 ou 2, caractérisé en ce que les moyens de fixation comprennent des organes de fixation (20) à quart de tour.

4. Ensemble selon la revendication 1 ou 2, caractérisé en ce que les moyens de fixation comprennent des loquets (42, 44, 46) soumis à la force d'un ressort, comprenant une tige (42) destinée à être logée dans des trous desdites surfaces internes de la superstructure.

5. Ensemble selon l'une quelconque des revendications précédentes, caractérisé en ce que la cage comporte un côté inférieur conformé de manière à délimiter une surface de mise en place (40) destinée à prendre appui contre des surfaces internes de la superstructure du véhicule.

6. Ensemble selon l'une quelconque des revendications précédentes, caractérisé en ce que la cage comporte des évidements (22) voisins de chaque extrémité pour permettre le passage de ceintures de siège de véhicule.

7. Ensemble selon l'une quelconque des revendications 1 à 3, caractérisé en ce que les moyens de fixation (20) sont destinés à être fixés à des surfaces intérieures sensiblement horizontales de la superstructure.

8. Ensemble selon la revendication 4, caractérisé en ce que les loquets sont fixés à la cage et les tiges (42) sont disposées et déplaçables sensiblement horizontalement.
